# FASCICULE DE BREVET EUROPEEN

(11) **EP 1 082 247 B1**
(45) Date de publication et mention de la délivrance du brevet: **08.09.2004**
(21) Numéro de dépôt: 00915221.6
(22) Date de dépôt: 27.03.2000
(51) Int. Cl.: B62D 21/11, B62D 21/15, B62D 35/02

(54) **COMBINAISON D'UNE PEAU DE PARE-CHOCS ET D'UN CARENAGE SOUS MOTEUR POUR VEHICULE**
KOMBINATION VON STOSSFÄNGERHAUT UND VERKLEIDUNGSTEIL FÜR DIE UNTERSEITE EINES MOTORS FÜR EIN FAHRZEUG
COMBINED AUTOMOTIVE BUMPER SKIN/ UNDER-ENGINE FAIRING

(30) Priorité: 29.03.1999 FR 9903874
(43) Date de publication de la demande: 14.03.2001
(73) Titulaire: PEGUFORM FRANCE, 27950 Saint Marcel (FR)
(72) Inventeur: RENAULT, Thierry, F-27200 Vernon (FR)
(74) Mandataire: Le Forestier, Eric
(86) Numéro de dépôt international: PCT/FR2000/000761
(87) Numéro de publication internationale: WO 2000/058144

(56) Documents cités:
- DE-A- 3 322 061
- FR-A- 2 445 783
- FR-A- 2 548 995
- FR-A- 2 757 124

## Description

L'invention concerne une combinaison d'une peau de pare-chocs avant de véhicule et d'une pièce de fermeture inférieure de compartiment moteur de véhicule, souvent appelée carénage sous moteur.

Une combinaison selon le préambule de la revendication 1 est connue de l'état de la technique. En plus, le document FR-A-2 757124 divulgue un carénage sous moteur comprenant une plaque présentant un plan général de symétrie et un profilé s'étendant dans la position d'utilisation selon la direction longitudinale du véhicule.

On sait qu'entre 3 et 10% des décès consécutifs à un accident de la circulation concernent des piétons. Parmi ces victimes, une majorité a été tuée en agglomération, en traversant ou en jouant sur la chaussée. Une première procédure d'essai réglementaire a été créée en 1996 visant à représenter un choc frontal d'un véhicule à 40 km/h contre un piéton traversant. Trois chocs ont été définis :
- choc de la tête sur le capot ;
- choc de la hanche ; et
- choc de la jambe.

Les constructeurs vont donc progressivement intégrer ces contraintes pour le développement de leurs véhicules.

Le choc de la jambe concerne directement le pare-chocs. Trois critères sont mesurés pour s'assurer que le tibia n'est pas cassé et que le genou n'est pas endommagé :
- la décélération sur le tibia doit être inférieure à 150 g, où g représente l'accélération de la pesanteur ;
- le cisaillement doit être inférieur à 6 mm ; et
- la flexion du genou inférieure à 15°.

Ces valeurs pourront être légèrement modifiées dans un prochain nouveau règlement mais resteront de cet ordre. Pour passer ce test, le pare-chocs est impacté dans trois zones différentes de sa longueur. Aujourd'hui, aucune voiture sur le marché ne répond à ces nouveaux critères, même si par hasard, une zone sur un pare-chocs donne parfois un bon résultat.

De plus, le choc piéton est en conflit avec les autres chocs standards définis sur le pare-chocs :
- choc parking à 4 km/h ; et
- choc réparabilité (ou Danner) à 15 km/h.

Ce dernier en particulier demande a priori une grande rigidité du pare-chocs alors que le choc piéton demande un pare-chocs mou.

Un but de l'invention est de proposer une solution simple et économique pour permettre aux véhicules de satisfaire aux critères associés au choc piéton ainsi qu'aux autres chocs classiques.

En vue de la réalisation de ce but, on prévoit selon l'invention une combinaison selon la revendication 1.

Ainsi, le profilé crée un point de contact bas permettant lors d'un choc piéton d'initier la rotation de la jambe, de sorte que le véhicule peut plus facilement remplir les critères précités (décélération, cisaillement, flexion). De plus, un avantage important de cette solution est qu'elle ne sollicite pas les longerons du véhicule. En effet, si pour créer un point d'appui bas aux fins du choc piéton on utilisait la poutre de pare-chocs classique reliée aux longerons, on risquerait par ailleurs que lors d'un choc frontal à 56 km/h ou 64 km/h le longeron se torde avant d'absorber l'énergie du choc, ce qui mettrait en péril la vie des passagers du véhicule. L'invention permet donc de créer aux fins du choc piéton un point d'appui bas ne sollicitant pas les longerons, la plaque de fermeture étant classiquement fixée au berceau moteur.

Avantageusement, la combinaison comprend un absorbeur de chocs s'étendant derrière la peau et devant le profilé.

Avantageusement, l'absorbeur comprend un matériau alvéolaire.

Avantageusement, l'absorbeur étant un absorbeur inférieur, la combinaison comprend en outre une poutre supérieure et un absorbeur de chocs supérieur monté derrière la peau et devant la poutre, l'absorbeur inférieur étant plus rigide que l'absorbeur supérieur à l'égard d'une sollicitation frontale depuis l'avant du véhicule.

Ainsi, on peut faire en sorte que l'absorbeur supérieur et la partie de la peau en regard s'étendent généralement plus en avant du véhicule que l'absorbeur inférieur et la partie de la peau associée, et ce pour des questions de style automobile. Néanmoins, lors d'un choc piéton, l'absorbeur supérieur tend à se déformer davantage que l'absorbeur inférieur de sorte que même si le premier contact de la jambe a lieu en haut du pare-chocs, le véritable appui sur la jambe est souvent rapidement transféré au bas du pare-chocs. On concilie ainsi les contraintes de style et celles de sécurité pour le piéton.

Avantageusement, le profilé s'étend intégralement en regard de la peau.

Ainsi, on se dispense de l'absorbeur inférieur.

Avantageusement, la pièce de fermeture comprend deux longerons, s'étendant suivant la direction de marche du véhicule.

On accroît ainsi la rigidité de la pièce de fermeture.

Avantageusement, le profilé forme un « U » avec les longerons en vue de dessus.

Avantageusement, la peau est agencée de sorte qu'une partie de la peau s'étendant, en profil, en avant du profilé, s'étend plus en avant que la ou les parties de la peau qui sont contiguës à cette partie.

On prévoit également selon l'invention une carrosserie de véhicule comprenant une combinaison selon l'invention.

D'autres caractéristiques et avantages de l'invention apparaîtront encore dans la description suivante d'un mode préféré de réalisation donné à titre d'exemple non limitatif. Aux dessins annexés :
- la figure 1 est une vue en coupe transversale d'une combinaison selon l'invention suivant le plan vertical longitudinal médian du véhicule, la figure illustrant en outre de façon schématique une jambe d'un piéton ; et

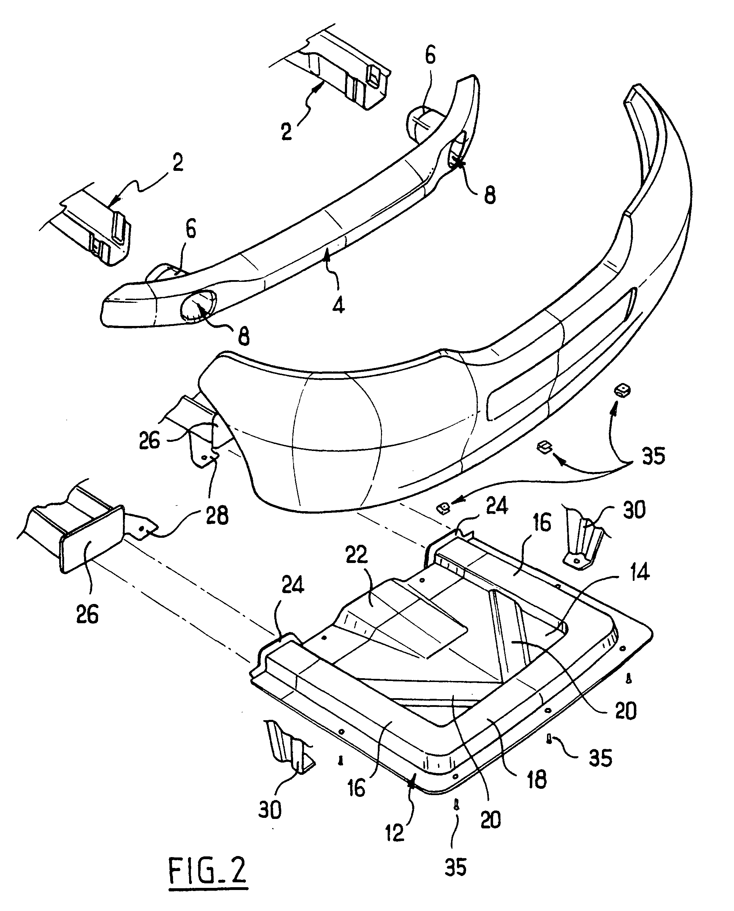

- la figure 2 est une vue en perspective éclatée d'une carrosserie incluant la combinaison de la figure 1, les absorbeurs de chocs n'ayant pas été illustrés.

En référence aux figures, on a représenté partiellement une carrosserie et un châssis de véhicule incluant la combinaison selon l'invention. Le châssis comprend deux longerons longitudinaux 2 d'un type classique s'étendant suivant la direction de marche du véhicule, par exemple en métal.

La carrosserie comprend une poutre 4 de pare-chocs, profilée, s'étendant transversalement à la direction de marche, en regard d'une extrémité avant des longerons 2, de l'un à l'autre des longerons. Cette poutre 4 est ici constituée en matériau thermoplastique renforcé par des fibres de verre. Elle est réalisée par moulage. Alternativement, la poutre pourra être en métal (acier ou aluminium par exemple) ou en matériau plastique thermodurcissable de type SMC (« Sheet molding compound » : moulage de préimprégnés). La poutre 4 a un profil transversal en « U » ouvert en direction de l'arrière du véhicule par référence au sens de marche principal du véhicule. Elle comporte deux protubérances 6 de forme générale cylindrique s'étendant au niveau de deux ouvertures 8 de la face avant de la poutre, en direction de l'arrière. Les protubérances 6 sont d'un seul tenant avec la poutre. Elles sont adaptées à être reçues dans les extrémités avant ouvertes des longerons 2 pour la fixation de la poutre à ceux-ci.

La carrosserie comprend un absorbeur de chocs supérieur 10 de forme profilée, réalisé en un matériau alvéolaire déformable tel qu'une mousse. Cet absorbeur 10 est monté devant la poutre 4, parallèlement à celle-ci, en appui contre la face avant de la poutre. Ce type d'absorbeur est connu en soi.

La carrosserie comprend une pièce de fermeture inférieure 12 de compartiment moteur, ou carénage sous moteur.

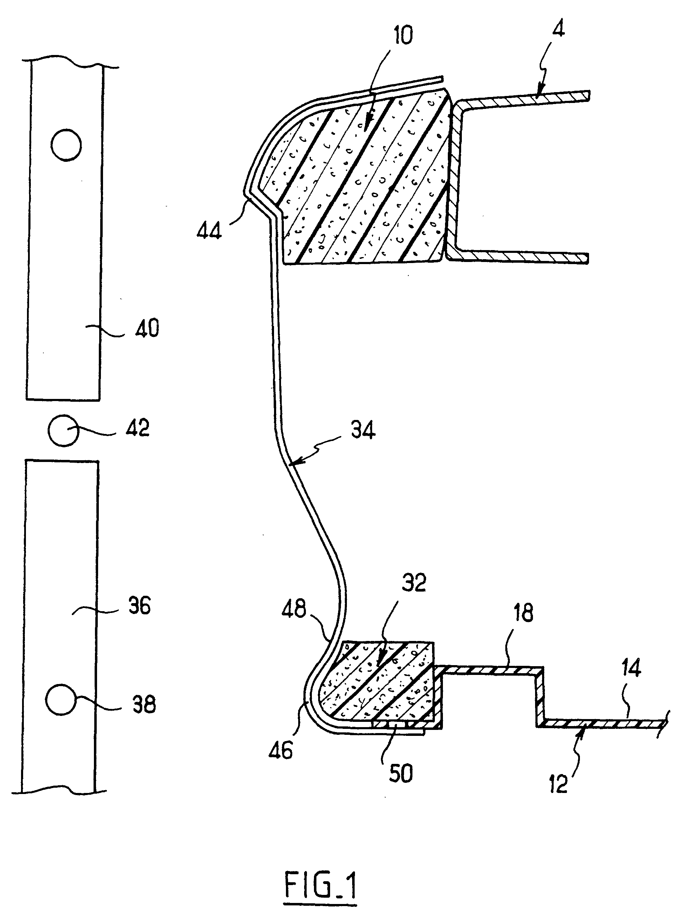

Le carénage 12 comprend une plaque 14 de forme générale rectangulaire non rigoureusement plane, et deux longerons ou longeronnets profilés 16 s'étendant suivant la direction de marche du véhicule, près des bords latéraux respectifs de la plaque. Le carénage 12 comporte en outre un profilé transversal avant 18 sous la forme d'une poutre s'étendant près d'un bord avant de la plaque 14. En vue en plan, le profilé 18 forme avec les longerons 16 un « U » ouvert vers l'arrière. Les deux longerons 16 et le profilé 18 sont ici jointifs entre eux. Ils sont d'un seul tenant avec la plaque 14. Le carénage 12 est ici réalisé par moulage en matériau thermoplastique. Les longerons 16 et le profilé 18 s'étendent en saillie d'une face supérieure de la plaque 12. Ils ont chacun un profil transversal en « U » ouvert vers le bas du côté de la face inférieure de la plaque comme l'illustre la figure 1 pour la poutre.

Le carénage présente en outre deux profilés rectilignes 20 à profil trapézoïdal s'étendant en oblique à partir du centre du profilé avant 18 jusqu'au centre des longerons 16. La plaque 14 présente une encoche 22 à son bord arrière. Le carénage a pour plan de symétrie le plan vertical longitudinal médian du véhicule.

Les longerons 16 présentent à leur extrémité arrière une butée plane 24, sous la forme d'une paroi obturant les longerons. Ces butées, perpendiculaires à la direction de marche du véhicule, viennent en appui contre des butées analogues 26 du berceau moteur du véhicule. Le carénage 12 est ici fixé par son bord arrière à deux pattes horizontales 28 venues du berceau moteur, par ses bords latéraux à deux pattes supérieures 30 venues de pièces de la carrosserie connues en soi, différentes des longerons 2 et non directement fixées à ceux-ci, et par son bord avant à la peau de pare-chocs comme on va le voir. Il ne s'agit là que d'un exemple de fixation du carénage au véhicule et il est clair que d'autres modes de fixation peuvent être envisagés. De préférence, on ne reliera pas le carénage aux longerons 2 afin qu'un choc sur le carénage n'entraîne pas leur flexion.

La carrosserie comprend un absorbeur de chocs inférieur 32 de forme profilée réalisé en un matériau alvéolaire déformable tel qu'une mousse. Cet absorbeur est monté devant le profilé transversal 18 du carénage 12, en appui contre celui-ci et sur le bord avant de la plaque 14. Il est ici collé à ceux-ci. Alternativement, il pourra être soudé ou clipsé au profilé 18.

Le profilé transversal 18 s'étend sensiblement à la verticale de la poutre de pare-chocs 4 sous celle-ci. De même, l'absorbeur inférieur 32 s'étend sensiblement à la verticale de l'absorbeur supérieur 10.

La carrosserie comprend une peau 34 de pare-chocs, profilée, d'un type classique s'étendant devant les deux absorbeurs 10, 32, de l'un à l'autre de ceux-ci en recouvrant leur face avant et en les dissimulant à la vue depuis l'avant du véhicule. La peau 34 est fixée à chaque absorbeur de façon classique, par exemple pour l'absorbeur inférieur 32 au moyen de boulons 34 qui traversent également la plaque 12 du carénage.

Le carénage 12 a une bonne stabilité lors d'un choc à 56 km/h. Un carénage de ce type dépourvu du profilé avant 18 et non associé à un absorbeur inférieur 32 est décrit dans la demande de brevet FR-2 757 124. Lors d'un choc piéton, le profilé 18 sert de point de contact bas au niveau du tibia 36 dont le centre de gravité est situé au point 38. Le tibia est séparé de la jambe 40 par le genou 42. De préférence, on disposera le carénage suffisamment bas pour que le choc se produise le plus souvent au-dessous du centre de gravité 38 du tibia afin de faciliter l'amorce de la rotation de la jambe.

Pour répondre aux autres contraintes classiques d'un carénage sous moteur, le carénage 12 peut être réalisé en matériau thermoplastique renforcé de fibres de verre. Ces contraintes sont :
- résistance aux fluides du compartiment moteur ;
- résistance aux petits chocs ;
- résistance au gravillonnage ;
- résistance à la propagation de la flamme ; et
- isolation et absorption acoustique.

On pourra réaliser le carénage 12 notamment en un matériau thermoplastique renforcé estampable (comprenant du polypropylène et des fibres de verre), en un matériau thermoplastique comprenant des mâts de fibres de verre entrelacés, en polypropylène injecté ou en polyuréthane renforcé par des fibres de verre. Alternativement, on pourra réaliser le carénage 12 en Sandwiform, qui désigne un sandwich de deux peaux composites en matériaux thermoplastiques de part et d'autre d'une couche de matériau thermoplastique en nids d'abeilles tel que décrit dans le brevet EP-0 649 736-B1.

L'isolation acoustique peut être obtenue de façon classique par l'adjonction d'une couche supplémentaire de matériau, par exemple du feutre.

Les longerons 16 et le profilé 18, ici ouverts en profil, pourront être fermés. On peut aussi mouler séparément la plaque 14 et l'un au moins parmi les longerons 16 et le profilé 18 et les assembler ensuite par rivetage, collage, soudage, etc. Les longerons 16 et le profilé 18 pourront être non jointifs.

On voit sur la figure 1 que l'absorbeur supérieur 10 s'étend plus en avant que l'absorbeur inférieur 32. Il en est de même pour les parties supérieure 44 et inférieure 46 respectives de la peau de pare-chocs qui les recouvrent. Le point de contact haut 44 du pare-chocs est donc plus en avant que le point de contact bas 46. Une telle solution est actuellement préférable en matière de style automobile. (Toutefois, on constate aussi que les parties 48 et 50 du pare-chocs qui sont contiguës à la partie inférieure 46 sont plus en arrière que celle-ci. La partie inférieure 46 est donc localement la partie la plus en avant et forme ainsi le point de contact bas). Pour compenser cela, il est préférable d'utiliser un absorbeur plus rigide en bas qu'en haut à l'égard d'une sollicitation frontale depuis l'avant du véhicule. On pourra par exemple utiliser pour les deux absorbeurs des mousses expansées de polypropylène, de densité 40 à 60 g/l pour l'absorbeur haut 10 et 80 à 100 g/l pour l'absorbeur bas 32. Ainsi, bien que le point haut 44 soit le plus en avant, il s'écrase davantage que le point bas 46 lors d'un choc piéton. Dès lors, durant le choc, l'appui effectif du pare-chocs sur la jambe tend à avoir lieu au point bas 46. Les rigidités effectives données à la poutre 4 et au profilé 18 peuvent également jouer un rôle à cet égard et donc être choisies en conséquence.

On peut utiliser d'autres matériaux pour les absorbeurs 10 et 32, par exemple de la mousse polyuréthanne pour les deux absorbeurs. Pour l'absorbeur bas, on pourra choisir une structure alvéolaire en nid d'abeilles en polypropylène ou polycarbonate.

On pourra donner au profilé 18 une position plus en avant et se dispenser de l'absorbeur bas 32 de sorte que le profilé 18 s'étend intégralement en regard de la peau 34.

Alternativement, on pourra disposer le point de contact bas 46 du pare-chocs à la verticale du point haut 44, voire plus en avant que celui-ci, de sorte que le point bas est le point le plus en avant, l'absorbeur bas 32 et le profilé 18 étant avancés en conséquence.

Selon l'invention, le point d'appui bas 46 n'étant pas relié aux longerons 2 du châssis, on évite la transmission des efforts à ceux-ci lors d'un choc sur le point bas 46 du pare-chocs, et donc leur déformation.

## Revendications

1. Combinaison d'une peau (34) de pare-chocs avant de véhicule et d'une pièce (12) de fermeture inférieure de compartiment moteur, montée derrière la peau par référence au sens principal de marche du véhicule, **caractérisée en ce que** la pièce de fermeture (12) comprend un profilé transversal avant (18).

2. Combinaison selon la revendication 1, **caractérisée en ce qu'**elle comprend un absorbeur de chocs (32) s'étendant derrière la peau (34) et devant le profilé (18).

3. Combinaison selon la revendication 2, **caractérisée en ce que** l'absorbeur (32) comprend un matériau alvéolaire.

4. Combinaison selon la revendication 2 ou 3, **caractérisée en ce que**, l'absorbeur (32) étant un absorbeur inférieur, elle comprend en outre une poutre supérieure (4) et un absorbeur de chocs supérieur (10) monté derrière la peau (34) et devant la poutre, l'absorbeur inférieur (32) étant plus rigide que l'absorbeur supérieur (10) à l'égard d'une sollicitation frontale depuis l'avant du véhicule.

5. Combinaison selon la revendication 1, **caractérisée en ce que** le profilé (18) s'étend intégralement en regard de la peau (34).

6. Combinaison selon l'une quelconque des revendications 1 à 5, **caractérisée en ce que** la pièce de fermeture (12) comprend deux longerons (16) s'étendant suivant la direction de marche du véhicule.

7. Combinaison selon la revendication 6, **caractérisée en ce que** le profilé (18) forme un « U » avec les longerons (16) en vue de dessus.

8. Combinaison selon l'une quelconque des revendications 1 à 7, **caractérisée en ce que** la peau (34) est agencée de sorte qu'une partie (46) de la peau s'étendant, en profil, en avant du profilé (18), s'étend plus en avant que la ou les parties de la peau (48, 50) qui sont contiguës à cette partie (46).

9. Carrosserie de véhicule, **caractérisée en ce qu'**elle comporte une combinaison selon l'une quelconque des revendications précédentes.

## Patentansprüche

1. Kombination aus einer Vorderstoßstangenschale (34) eines Fahrzeugs und einem unteren Schließteil (12) des Motorraums, das hinter der Schale bezüglich der Hauptfahrtrichtung des Fahrzeugs eingebaut ist, **dadurch gekennzeichnet, dass** das Schließteil (12) einen vorderen Querträger (18) umfaßt.

2. Kombination nach Anspruch 1, **dadurch gekennzeichnet, dass** sie einen Stoßdämpfer (32) umfaßt, der sich hinter der Schale (34) und vor dem Träger (18) erstreckt.

3. Kombination nach Anspruch 2, **dadurch gekennzeichnet, dass** der Dämpfer (32) ein zellenartiges Material umfaßt.

4. Kombination nach Anspruch 2 oder 3, **dadurch gekennzeichnet, dass** sie, wobei der Dämpfer (32) ein unterer Dämpfer ist, außerdem einen oberen Balken (4) und einen oberen Stoßdämpfer (10) umfaßt, der hinter der Schale (34) und vor dem Balken eingebaut ist, wobei der untere Dämpfer (32) hinsichtlich einer frontalen Beanspruchung vom Vorderteil des Fahrzeugs (34) starrer ist als der obere Dämpfer (10).

5. Kombination nach Anspruch 1, **dadurch gekennzeichnet, dass** der Träger (18) sich einstückig gegenüber der Schale (34) erstreckt.

6. Kombination nach einem der Ansprüche 1 bis 5, **dadurch gekennzeichnet, dass** das Schließteil (12) zwei Längsträger (16) umfaßt, die sich in Bewegungsrichtung des Fahrzeugs erstrecken.

7. Kombination nach Anspruch 6, **dadurch gekennzeichnet, dass** der Träger (18) mit den Längsträgern (16), von oben betrachtet, ein "U" bildet.

8. Kombination nach einem der Ansprüche 1 bis 7, **dadurch gekennzeichnet, dass** die Schale (34) so ausgebildet ist, dass ein Teil (46) der Schale, der sich im Profil vor dem Träger (18) erstreckt, sich weiter nach vorne erstreckt als der oder die Teile der Schale (48,50), die an diesen Teil (46) anschließen.

9. Fahrzeugkarosserie, **dadurch gekennzeichnet, dass** sie eine Kombination nach einem der vorhergehenden Ansprüche aufweist.

## Claims

1. A combination of a vehicle front bumper skin (34) and a bottom closure piece (12) for the engine compartment and mounted behind the skin relative to the main travel direction of the vehicle, the combination being **characterized in that** the closure piece (12) includes a front transverse section member (18).

2. A combination according to claim 1, **characterized in that** it includes a shock absorber (32) extending behind the skin (34) and in front of the section member (18).

3. A combination according to claim 2, **characterized in that** the absorber (32) comprises a cellular material.

4. A combination according to claim 2 or 3, **characterized in that** the absorber (32) is a bottom absorber, and the combination further includes a top beam (4) and a top shock absorber (10) mounted behind the skin (34) and in front of the beam, the bottom absorber (32) being stiffer than the top absorber (10) against a frontal impact from the front of the vehicle.

5. A combination according to claim 1, **characterized in that** the section member (18) extends entirely in register with the skin (34).

6. A combination according to any one of claims 1 to 5, in that the closure piece (12) includes two side rails (16) extending in the travel direction of the vehicle.

7. A combination according to claim 6, **characterized in that** the section member (18) and the side rails (16) form a U-shape when seen from above.

8. A combination according to any one of claims 1 to 7, **characterized in that** the skin (34) is arranged in such a manner that, in profile, a portion (46) of the skin extends in front of the section member (18) so as to be further forward than the portion(s) of the skin (48, 50) which are contiguous with said portion (46).

9. Vehicle bodywork, **characterized in that** it includes a combination according to any preceding claim.
